# EUROPEAN PATENT SPECIFICATION

(11) **EP 1 990 395 B1**
(45) Date of publication and mention of the grant of the patent: **27.06.2012**
(21) Application number: 08154788.7
(22) Date of filing: 18.04.2008
(51) Int. Cl.: C09K 3/14

(54) **Acid-Based Polymeric Dispersants With 2-[2-(2-Methoxyethoxy)ethoxy]acetic Acid**
Polymere Dispergiermittel auf Säurebasis mit 2-[2-(2-Methoxyethoxy)ethoxy]Essigsäure
Dispersants polymères à base d'acide contenant de l'acide 2-[2-(2-méthoxyéthoxy)éthoxy]acétique

(30) Priority: 25.04.2007 US 913852 P; 08.04.2008 US 99438
(43) Date of publication of application: 12.11.2008
(73) Proprietor: Air Products and Chemicals, Inc., Allentown, PA 18195-1501 (US)
(72) Inventor: Mercando, Lisa Ann, Pennsburg, PA Pennsylvania 18073 (US); Quay, Jeffrey Raymond, Kutztown, PA Pennsylvania 19530 (US)
(74) Representative: Westendorp | Sommer

(56) References cited:
- US-A1- 2006 204 745
- US-B1- 7 081 234

## Description

### BACKGROUND OF THE INVENTION

This invention relates to dispersants or dispersing agents and particulate dispersions including nanoparticle dispersions.

Nanoparticles of metal oxides and metal borides, specifically, those of zinc, zirconium, cerium, titanium, aluminum, lanthanum, indium and tin have important commercial applications. Nano zirconia, ceria and alumina are of interest for scratch resistant coatings and heat transfer fluids. Additionally, aluminum metal nanoparticles that have been passivated with a thin layer of aluminum oxide are of use in the development of energetic materials. Indium tin oxide (ITO) nanoparticles have applications in clear conductive coatings, in heat management layers, and in static charge dissipation. Zinc oxide and titania (TiO2) are of interest for UV blocking applications, including sunscreens, clothing and coatings. Other applications of metal oxide nanoparticles and/or nanoparticles that have a metal oxide surface include magnetic materials, heterogeneous catalysts, toner compositions, and ceramics.

In order to supply nanoparticles and/or microparticles for expedient use as dispersions for master batches or in fully formulated compositions, the particles must be dispersed in various liquids and polymeric matrices. The quality of the dispersion should be commensurate with its intended use. For example, the presence of color or haze is unacceptable in many applications, including inks and coatings. In addition, the dispersion is preferably stable so it does not have to be prepared immediately before use, but can be stored after preparation.

US Patent Application Publication No. 2003/0032679 describes the dispersion of nanoparticles in solvents using commercially available dispersants; the disclosure of which is hereby incorporated by reference.

### BRIEF SUMMARY OF THE INVENTION

The instant invention solves problems associated with conventional dispersions by treating particulate surfaces with a dispersant comprising 2-[2-(2-methoxyethoxy)ethoxy]acetic acid and derivatives thereof, and at least one acidic polymeric dispersant. These two types of dispersants result in a stable and clear dispersion when combined with organic solvents. In addition, this stable dispersion can be prepared into a formulation that yields dried films with very good clarity.

The invention relates to a composition for surface treating metal or metal oxide particles (e.g., nanoparticles). The composition comprises:
i) about 1:10 to about 5:1 ratio of at least one surface treating agent 2-[2-(2-methoxyethoxy)ethoxy]acetic acid to nanoparticle based on weight; and,
ii) about 1:10 to about 5:1 of at least one acid functional polymeric dispersant to nanoparticle based on weight.

### DETAILED DESCRIPTION OF THE INVENTION

The invention relates to a composition for surface treating metal or metal oxide particles (e.g., nanoparticles) which can be combined with at least one solvent in order to obtain a particulate dispersion. The dispersion can in turn be combined with or incorporated in other materials to produce a formulated or end-use product. The composition comprises:
i) about 1:10 to about 5:1 1 ratio of at least one surface treating agent 2-[2-(2-methoxyethoxy)ethoxy]acetic acid to nanoparticle based on weight; and,
ii) about 1:10 to about 5:1 of at least one acid functional polymeric dispersant to nanoparticle based on weight.

While any suitable acid functional polymeric dispersants can be employed, examples of suitable polymeric dispersants comprise at least one member selected from the group consisting of saturated phosphate polyester or copolymer with acidic groups (e.g., Disperbyk® 110, Disperbyk® 111), solutions of high molecular block copolymers with pigment affinic groups (e.g., Disperbyk® 174), among other acid functional polymeric compounds. In one aspect of the invention, at least one fatty acid derivative of an acid functional polymeric dispersant is used instead of or in conjunction with other acid functional dispersants (e.g., Tego® 652).

While any suitable solvent or combinations thereof can be employed, examples of such solvents comprise at least one member selected from the group consisting of methyl ethyl ketone, toluene, butyl cellosolve acetate (2-butoxyethyl acetate) and butyl acetate.

The inventive dispersions are typically incorporated within or combined with other materials in order to produce an end-use or formulated product. The amount of dispersion in the formulated product can range from about 0.1 wt% to about 80 wt% of the formulated product. The inventive dispersion can be added during any step of the formulation of the coating system.

The inventive dispersion can be incorporated for use within a wide range of formulated products. Examples of such formulated products comprise adhesives, coatings, composites, laminates, among other products.

The end use for these dispersions are for relatively transparent and low haze coatings, binders and surface treatments containing metal and metal oxide nanoparticles in organic solvents.

In one aspect of the invention, the inventive dispersion is added to a formulated product comprising a coating. The coating can be employed to impart a wide range of properties to the underlying substrate. In one aspect of the invention, the coating is applied onto a substrate comprising at least one of glass and plastic. The coating can impart improved solar control, anti-static, electrical conductivity, among other properties. For example, an inventive dispersion comprising ITO particles and butyl acetate (e.g., Example 2 infra) can be employed for providing solar control for window films.

The following Examples are provided in order to illustrate certain aspects of the invention and shall not limit the scope of any claims appended hereto.

### Comparative Example 1

2 g of (2-(2-butoxyethoxy)ethyl acetate (BCA) and 5 g of 2-[2-(2-methoxyethoxy)ethoxy]acetic acid were diluted in 70 g of butyl acetate. 25 g of indium tin oxide nanopowder was added slowly while stirring. The mixture was ultrasonicated for 1 hour and then run through a Netzsch mill at between 2500-4200 rpm for 1-3 hours. The grinding media in the mill was yttria-doped zirconia 0.1mm size. This mixture was not stable and settled in 1 hour, even though the initial particles size Z average was between 30-70 nm.

### Example 2

Same procedure as Example 1, except an acid-functional polymeric dispersant was added to the mixture immediately after milling. In butyl acetate, the amount of the acid functional polymeric dispersant is >10 wt%, based upon ITO solids (e.g., 20 wt% acid functional polymeric dispersant, based upon ITO solids). Particle size Z average was between 30-60 nm. Product is a dark blue dispersion which exhibits little or no settling of the ITO.

### Comparative Example 3

10 g of Disperbyk 110 was added to butyl acetate and indium tin oxide nanopowder was added slowly while stirring. The mixture was ultrasonicated for a few minutes. The mixture began to rapidly rise in viscosity and the dispersion process was halted. The dispersion was not stable.

### Comparative Example 4

Post addition of base-functional polymeric dispersants (e.g., Byk® 9077 a polyester based copolymer; Disperbyk® 2150; Disperbyk® 190; Disperbyk® 192; Disperbyk® 181; Disperbyk® 180; Disperbyk® 161; and Disperbyk® 183) to the dispersion from Example 1 resulted either in an unstable dispersion immediately or a dispersion that settled/destabilized within a few days.

### Example 5

Same procedure as Example 1, except the acid-functional polymeric dispersant was added along with the 2-[2-(2-methoxyethoxy)ethoxy]acetic acid into the solvent. Particle size Z average was between 30-60 nm. Product is a dark blue dispersion which exhibits little or no settling of the ITO.

### Example 6

Same procedure as Example 1, except in the absence of (2-2-butoxyethoxy)ethyl acetate (BCA). Particle size Z average was between 30-60 nm. Product is a dark blue dispersion which exhibits little or no settling of the ITO.

### Example 7

3.6 g of 2-[2-(2-methoxyethoxy)ethoxy]acetic acid was diluted in 70 g of butyl acetate. 25 g of indium tin oxide nanopowder was added slowly while stirring. The mixture was mixed using a "Rotostater" (Ultra -Turrax, IKA Labotechnik, Model # SD45) covering the side holes with the liquid level for 15 min on the 60 dial speed. The mixture was then run through a Netzsch mill at 2500 rpm for 1 hour and then at 4200 rpm for an additional hour. The grinding media in the mill was yttria-doped zirconia 0.1mm size. 0.93 g of disperbyk 110 and 5.5 g of (2-(2-butoxyethoxy)ethyl acetate (BCA) was then added while stirring. Particle size Z average was between 50-80 nm. Product is a dark blue dispersion which exhibits little or no settling of the ITO.

### Comparative Example 8

4 g of 2-[2-(2-methoxyethoxy)ethoxy]acetic acid was diluted in 72 g of toluene (or methyl ethyl ketone can be used as the solvent instead). 25 g of lanthanum hexaboride nanopowder was added slowly while stirring. The mixture was mixed using a "Rotostater" (Ultra -Turrax, IKA Labotechnik, Model # SD45) covering the side holes with the liquid level for 15 min on the 60 dial speed. 2 g of disperbyk 110 and 2 g of (2-(2-butoxyethoxy)ethyl acetate (BCA) was then added while stirring. The mixture was then run through a Netzsch mill at 2500-4200 rpm for 3 hours. The grinding media in the mill was yttria-doped zirconia 0.1mm size. Particle size Z average was between 500-1000 nm. Product is a dark purple dispersion which exhibits little or no settling of the lathnaum hexaboride.

## Claims

1. A composition comprising:
i) 1:10 to 5:1 ratio of at least one surface treating agent 2-[2-(2-methoxyethoxy)ethoxy]acetic acid to nanoparticle based on weight; and,
ii) 1:10 to 5:1 of at least one acid functional polymeric dispersant to nanoparticle based on weight, wherein the nanoparticles are metal or metal oxide particles or comprise metal nanoparticles.

2. The composition of Claim 1 further comprising at least one organic solvent.

3. The composition of Claim 2 wherein said organic solvent comprises at least one of methyl ethyl ketone, toluene, butyl cellosolve acetate and butyl acetate.

4. The composition of any one of Claims 1 to 3 wherein the at least one acid functional polymeric dispersant comprises at least one members selected from the group consisting of saturated phosphate polyester or copolymer with acidic groups.

5. A dispersion comprising:
i) 1:10 to 5:1 ratio of at least one surface treating agent 2-[2-(2-methoxyethoxy)ethoxy]acetic acid to nanoparticle based on weight; and,
ii) 1:10 to 5:1 of at least one acid functional polymeric dispersant to nanoparticle based on weight,
iii) nanoparticles, wherein the nanoparticles are metal or metal oxide particles or comprise metal nanoparticles, and,
iv) at least one solvent.

6. The dispersion of Claim 5 wherein the metal oxide nanoparticles comprise indium tin oxide nanoparticles.

7. The dispersion of Claim 5 wherein the solvent comprises at least one of methyl ethyl ketone, toluene, butyl cellosolve acetate and butyl acetate.

8. A dispersion comprising:
i) 2-[2-(2-methoxyethoxy)ethoxy]acetic acid;
ii) at least one acid functional polymeric dispersant;
iii) at least one solvent,
iii) nanoparticles, wherein the nanoparticles are metal or metal oxide particles or comprise metal nanoparticles; wherein the amount of acid and dispersant are sufficient to form a dispersion.

9. Process for preparing a particulate dispersion by combining at least one solvent with a composition according to claim 1.

## Patentansprüche

1. Zusammensetzung, umfassend:
i) 1:10 bis 5:1-Verhältnis von mindestens einem Oberflächenbehandlungsmittel 2-[2-(2-Methoxyethoxy)ethoxy]essigsäure zu Nanopartikel, bezogen auf das Gewicht; und
ii) 1:10 bis 5:1 von mindestens einem säurefunktionalisierten polymeren Dispergiermittel zu Nanopartikel, bezogen auf das Gewicht, wobei die Nanopartikel Metall- oder Metalloxid-Partikel sind oder Metall-Nanopartikel umfassen.

2. Zusammensetzung nach Anspruch 1, ferner umfassend mindestens ein organisches Lösungsmittel.

3. Zusammensetzung nach Anspruch 2, wobei das organische Lösungsmittel mindestens eines von Methylethylketon, Toluol, Butylcellosolveacetat und Butylacetat umfasst.

4. Zusammensetzung nach einem der Ansprüche 1 bis 3, wobei das mindestens eine säurefunktionalisierte polymere Dispergiermittel mindestens ein Mitglied umfasst, welches aus der Gruppe ausgewählt ist, die aus gesättigtem Phosphatpolyester oder Copolymer mit sauren Resten besteht.

5. Dispersion, umfassend:
i) 1:10 bis 5:1-Verhältnis von mindestens einem Oberflächenbehandlungsmittel 2-[2-(2-Methoxyethoxy)ethoxy]essigsäure zu Nanopartikel, bezogen auf das Gewicht; und
ii) 1:10 bis 5:1 von mindestens einem säurefunktionalisierten polymeren Dispergiermittel zu Nanopartikel, bezogen auf das Gewicht,
iii) Nanopartikel, wobei die Nanopartikel Metall- oder Metalloxid-Partikel sind oder Metall-Nanopartikel umfassen, und
iv) mindestens ein Lösungsmittel.

6. Dispersion nach Anspruch 5, wobei die Metalloxid-Nanopartikel Indiumzinnoxid-Nanopartikel umfassen.

7. Dispersion nach Anspruch 5, wobei das Lösungsmittel mindestens eines von Methylethylketon, Toluol, Butylcellosolveacetat und Butylacetat umfasst.

8. Dispersion, umfassend:
i) 2-[2-(2-Methoxyethoxy)ethoxy]essigsäure;
ii) mindestens ein säurefunktionalisiertes polymeres Dispergiermittel;
iii) mindestens ein Lösungsmittel,
iv) Nanopartikel, wobei die Nanopartikel Metall- oder Metalloxid-Partikel sind oder Metall-Nanopartikel umfassen; wobei die Menge an Säure und Dispergiermittel zur Bildung einer Dispersion ausreicht.

9. Verfahren zur Herstellung einer partikulären Dispersion durch Zusammenführen von mindestens einem Lösungsmittel mit einer Zusammensetzung gemäß Anspruch 1.

## Revendications

1. Composition comprenant :
i) un rapport allant de 1:10 à 5:1 d'au moins un agent de traitement des surfaces acide 2-[2-(2-méthoxyéthoxy)éthoxy]acétique à des nanoparticules, en poids, et
ii) un rapport allant de 1:10 à 5:1 d'au moins un dispersant polymère fonctionnel acide à des nanoparticules, en poids, où les nanoparticules sont des particules métalliques ou d'oxyde métallique ou comprennent des nanoparticules métalliques.

2. Composition selon la revendication 1, comprenant en outre, au moins un solvant organique.

3. Composition selon la revendication 2, dans laquelle ledit solvant organique comprend au moins l'un parmi la méthyléthylcétone, le toluène, l'acétate de butylcellosolve et l'acétate de butyle.

4. Composition selon l'une quelconque des revendications 1 à 3, où le au moins un dispersant polymère fonctionnel acide comprend au moins un membre choisi parmi le groupe consistant en un polyester saturé de phosphate ou un copolymère avec des radicaux acides.

5. Dispersion comprenant :
i) un rapport allant de 1:10 à 5:1 d'au moins un agent de traitement des surfaces acide 2-[2-(2-méthoxyéthoxy)éthoxy]acétique à des nanoparticules, en poids,
ii) un rapport allant de 1:10 à 5:1 d'au moins un dispersant polymère fonctionnel acide à des nanoparticules, en poids,
iii) des nanoparticules, où les nanoparticules sont des particules métalliques ou d'oxyde métallique ou comprennent des nanoparticules métalliques, et
iv) au moins un solvant.

6. Dispersion selon la revendication 5, où les nanoparticules d'oxyde métallique comprennent des nanoparticules d'oxyde d'indium-étain.

7. Dispersion selon la revendication 5, où le solvant comprend au moins l'un parmi la méthyléthylcétone, le toluène, l'acétate de butylcellosolve et l'acétate de butyle.

8. Dispersion comprenant :
i) l'acide 2-[2-(2-méthoxyéthoxy)éthoxy]acétique ;
ii) au moins un dispersant polymère fonctionnel acide ;
iii) au moins un solvant ;
iv) des nanoparticules, où les nanoparticules sont des particules métalliques ou en oxyde métallique ou comprennent des nanoparticules métalliques, et où la quantité d'acide et de dispersant est suffisante pour former une dispersion.

9. Procédé de préparation d'une dispersion particulaire comprenant la combinaison d'au moins un solvant avec une composition selon la revendication 1.
